# FASCICULE DE BREVET EUROPEEN

(11) **EP 2 277 765 B1**
(45) Date de publication et mention de la délivrance du brevet: **09.01.2013**
(21) Numéro de dépôt: 10170459.1
(22) Date de dépôt: 22.07.2010
(51) Int. Cl.: B62D 33/06, E02F 9/16

(54) **Cabine frontale de conduite pour véhicule**
Fahrerhaus eines Fahrzeugs
Front cab for a vehicle

(30) Priorité: 23.07.2009 FR 0955160
(43) Date de publication de la demande: 26.01.2011
(73) Titulaire: Noremat, 54700 Ludres (FR)
(72) Inventeur: Bachmann, Jacques, 54550, MAIZIERES (FR); Eudes, Frédéric, 88000, EPINAL (FR)
(74) Mandataire: Loyer & Abello

(56) Documents cités:
- EP-A- 0 842 842
- WO-A-2008/139814
- DE-U1- 20 007 995
- JP-A- 6 240 707

## Description

La présente invention est relative à une cabine de conduite pour engins de travaux publics ou agricoles.

De manière connue en soi, les tracteurs agricoles et engins de travaux publics, tels qu'un engin de nettoyage des bas-côtés des routes, sont souvent équipés d'un outil travaillant à l'arrière, sur le côté ou à l'avant du véhicule.

Au cours d'un travail avec un tel véhicule, l'opérateur doit surveiller le travail de l'outil alors qu'en même temps il doit regarder devant lui pour diriger correctement le véhicule.

Il s'ensuit que l'opérateur doit effectuer de façon continuelle des mouvements de tête qui sont sources de ce que la médecine du travail appelle des troubles musculo-squelettiques (T.M.S).

Alors que dans les tracteurs agricoles classiques la cabine de conduite est disposée à l'arrière du véhicule, derrière le moteur, il est connu, par exemple pour des moissonneuses-batteuses ou des machines à vendanger, de disposer la cabine de conduite de façon frontale.

Les documents DE 200 07 995 U1, qui montre le préambule de la revendication 1.EP 0842842, W0 2008/139814 et JP 06 240707 décrivent des cabines ou postes d'opération de l'art antérieur.

Cependant de telles cabines, si elles permettent à l'opérateur de bien surveiller l'outil qui est attelé devant son engin, ne permettent pas une surveillance commode de l'outil, lorsqu'il est disposé latéralement, comme c'est le cas en particulier des outils de fauchage des bas-côtés de route, ou épareuses, qui sont disposés sur le côté et souvent un peu en arrière.

Ces cabines ne sont pas conçues en particulier pour permettre une vision des outils d'élagage.

La présente invention a pour objet de remédier à ces inconvénients en proposant une cabine de conduite frontale qui améliore la visibilité dans toutes les directions.

La cabine frontale de conduite pour véhicule selon l'invention est **caractérisée** par la revendication 1.

La cabine selon des modes particuliers de réalisation de l'invention est encore remarquable en ce que :
- ladite structure de support porte une armature définissant plusieurs faces sur laquelle sont fixées les parois de la cabine,
- les faces avant et latérales, transparentes, sont bombées vers le bas pour améliorer la visibilité vers le bas,
- la structure de support est disposée dans son plan médian,
- la face arrière est constituée de la jambe verticale de la structure de support encadrée de panneaux arrières, lesdits panneaux arrières étant au moins en partie transparents,
- lesdits panneaux encadrant la jambe verticale de la structure de support font un angle, dirigé vers l'avant, de l'ordre de 15° par rapport à l'axe transversal de la cabine,
- l'un des panneaux arrières constitue la porte d'entrée de la cabine,
- la face supérieure est constituée par la jambe horizontale de la structure porteuse encadrée de deux panneaux transparents,
- l'un au moins des deux panneaux transparents de la face supérieure constitue une issue de secours normalisée,
- la structure de support est disposée sur un coté de la cabine.

L'invention sera mieux comprise grâce à la description qui va suivre donnée à titre d'exemple non limitatif en référence aux dessins annexés dans lesquels :
- la figure 1 est une vue en perspective, vue de haut et par l'avant d'un exemple de réalisation de l'invention,
- la figure 2 est une vue en perspective, vue de haut et par l'arrière de la cabine de la figure 1,
- la figure 3 est une vue de face de la cabine de la figure 1,
- la figure 4 est une vue de coté de la cabine de la figure 1,
- la figure 5 est une vue arrière de la cabine de la figure 1,
- la figure 6 est une vue de dessus de la cabine de la figure 1.

La cabine selon l'invention est une cabine frontale 1 disposée au-dessus de l'axe des roues avant 2 d'un véhicule partiellement représenté au dessin.

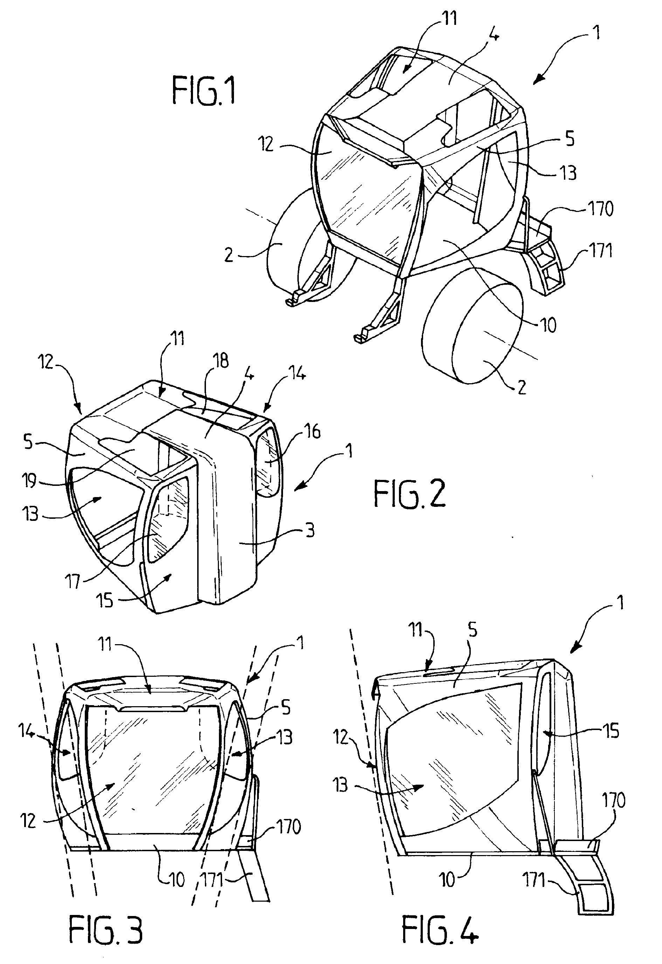

Comme visible à la figure 2, cette cabine est constituée autour d'une structure de support qui a la forme d'un L inversé, dont une jambe 3 est arrière verticale, située à l'arrière de la cabine, et dont l'autre jambe 4 est supérieure horizontale, au toit et dirigée vers l'avant du véhicule.

Cette structure de support porte une armature 5 qui définit les six faces d'un polyèdre irrégulier, sur laquelle sont fixées les parois de la cabine.

La face inférieure 10 constitue le plancher de la cabine et la face supérieure 11 en constitue le plafond. Le polyèdre comporte encore une face avant 12, deux faces latérales 13 et 14, ainsi qu'une face arrière 15.

Le plancher 10 est de forme trapézoïdale, avec la petite base du trapèze à l'avant et la grande base à l'arrière.

Ce plancher 10 de forme trapézoïdale, plus étroit sur la partie avant, permet à l'opérateur de voir les roues avant du véhicule, pour vérifier le gabarit du véhicule lors de passages sur un chemin étroit et permet aussi à l'opérateur de voir les outils ou le travail latéral bas à gauche ou à droite.

La face avant 12 est de forme trapézoïdale, la petite base du trapèze étant en bas, adjacente à la petite base du plancher 10.

Cette face avant 12 comporte ou est constituée par un panneau transparent. Ce pare-brise panoramique offre une vision frontale maximale basse et haute. L'opérateur en vision frontale basse voit ainsi l'outil avant situé devant la cabine, et voit les extrémités des bras de relevage avant, qui posent et déposent l'outil.

La vision frontale générale offre une excellente vision de conduite sur route du véhicule.

On utilise dans la présente demande l'adjectif « transparent » pour désigner le fait que l'opérateur peut voir ce qui se passe à l'extérieur de la cabine à travers la surface désignée, le panneau étant constitué par un panneau teinté ou non, en verre ou en toute autre matière, par exemple plastique.

De plus, ladite face avant 12 est bombée et incurvée vers l'avant et le bas ce qui favorise la vision de l'opérateur vers l'avant et le bas en créant une zone transparente inclinée par rapport à la verticale à travers laquelle l'opérateur peut voir le sol sans avoir à se pencher.

Les deux faces latérales 13 et 14 sont également constituées de panneaux transparents et sont également incurvées vers le bas, de manière à favoriser de la même façon la vision de l'opérateur sur les cotés et vers le bas.

Ces larges vitres latérales 13 et 14 incurvées vers le bas permettent une vision optimum de l'outil situé à gauche ou à droite de l'opérateur.

La cabine peut recevoir une protection tubulaire spécifique destinée à la protéger des chutes de branches éventuelles liées à l'activité d'élagage. Cette protection tubulaire vient coiffer la cabine tout en respectant les zones de vision et d'accès à la cabine. Le montage de cette protection s'effectue avantageusement par boulonnage sur des points d'ancrages prédéfinis et intégrés de série.

Sur les figures 3 et 4 on a illustré le fait que les faces 12, 13 et 14 sont à la fois incurvées et inclinées en marquant en traits pointillés les plans inclinés tangents au renflement des montants avant et arrière de la structure 5. Comme visible sur ces figures, les parties basses des faces 12, 13, 14 s'écartent de ces plans inclinés vers le bas, en direction de l'intérieur de la cabine de sorte que la vision de l'opérateur est améliorée par rapport à la vison obtenue avec des faces planes.

La cabine 1 selon l'invention présente un volume globalement en forme de tronc de pyramide inversée, évasée vers le haut par ses parois frontale 12 et latérales 13, 14.

Cette cabine 1 selon l'invention à volume global inversé évasé vers le haut sur les parois frontale 12 et latérales 13, 14.permet de protéger les vitrages d'un trop fort ensoleillement et de filtrer les ultraviolets. Cette architecture protège aussi les vitrages des projections liées à la pluie.

Le confort de l'opérateur est ainsi amélioré et l'énergie consommée par le climatiseur est ainsi réduite.

Cette disposition, permettant de protéger les vitrages d'un trop fort ensoleillement, et de filtrer les ultraviolets en diminuant l'énergie consommée par le climatiseur, et en protégeant les vitrages des projections liées à la pluie, améliore la vision de l'opérateur qui n'est plus ébloui par les rayons du soleil.

La face arrière 15 de la cabine comporte la jambe verticale 3 de la structure de support. Dans l'exemple représenté au dessin, ladite jambe verticale 3 est encadrée de deux panneaux au moins en partie transparents 16 et 17. Ces ouvertures vitrées 16 et 17 permettent à l'opérateur de voir les travaux et manoeuvres situées derrière la cabine, de préférence par pivotement grâce à un poste de conduite mobile spécifique

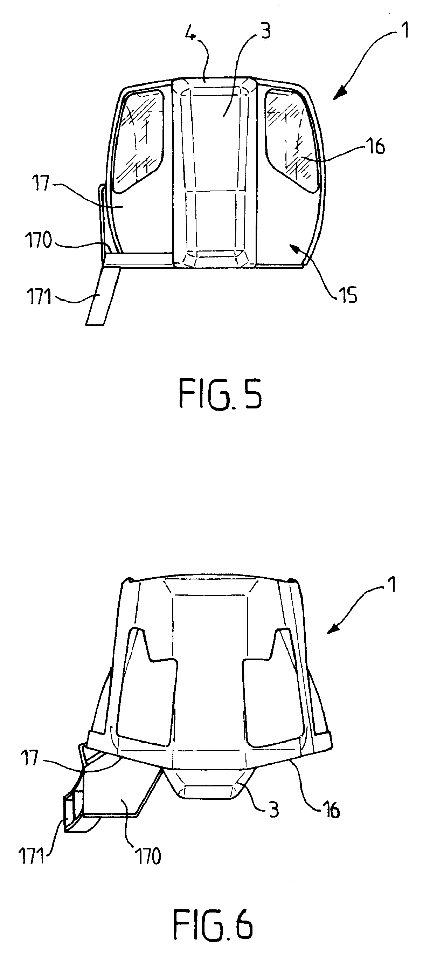

Comme représenté à la figure 5, ces panneaux 16 et 17 sont de manière préférée disposés obliquement en faisant un angle, dirigé vers l'avant, de l'ordre de 15 à 20 ° par rapport à l'axe transversal de la cabine 1.

L'un au moins de ces deux panneaux 16 et 17 est articulé sur une charnière afin de constituer une porte d'accès à l'intérieur de la cabine 1. Une plate-forme 170 et un échelle 171 permettent au conducteur d'accéder à la cabine 1.

De manière préférée, la porte d'accès est disposée du côté de la cabine opposé à celui où se trouve la machine lorsque celle-ci travaille sur le côté du véhicule. Par une telle disposition, la sortie ne se fait pas du côté de la machine ce qui permet d'éviter tout accident si l'opérateur sort de la cabine alors que la machine n'est pas totalement arrêtée.

Lorsque l'accès à la cabine se fait du côté opposé au côté ou travaille l'outil, l'accès se fait ainsi à gauche pour les pays ou l'outil travaille à droite de la cabine, et réciproquement.

A titre d'exemple, pour un engin destiné à travailler dans un pays où l'on roule sur la droite de la route, la machine travaille sur le bord droit de la route et la porte d'accès est constituée par le panneau 17 disposé sur la gauche de la cabine 1.

L'angle prévu entre ledit panneau 16, 17 constituant la porte d'accès et l'axe transversal de la cabine facilite l'accès à l'intérieur de ladite cabine 1.

Comme visible à la figure 2, la face supérieure 11 du polyèdre à six faces, formant le toit de la cabine 1 est également trapézoïdale, la petite base du trapèze étant dirigée vers l'avant.

De façon analogue à la face arrière 15, dans l'exemple de réalisation représenté au dessin, le toit 11 est constitué par la jambe horizontale 4 de la structure porteuse encadrée par deux panneaux au moins en partie transparents 18 et 19. Ces lucarnes occultables 18 et 19 situées au niveau du toit à gauche et à droite de l'axe de symétrie de la cabine permettent de voir les outils d'élagage travailler en hauteur

Cette disposition est particulièrement avantageuse car elle permet également à l'opérateur de surveiller tout autre travail de la machine, lorsque celle-ci est utilisée en hauteur.

De préférence, ces deux panneaux 18 et 19 sont agencés de façon à constituer des issues de secours normalisées.

Des éléments adaptables sur les panneaux 18, 19 sont de plus prévus de manière à occulter ou à protéger lesdits panneaux.

Ces éléments d'occultation non représentés au dessin sont aptes à occulter l'un et/ou l'autre panneau 18 ou 19. En effet, suivant le travail réalisé, l'opérateur peut ne pas regarder vers le haut à travers ces panneaux 18, 19 ou être amené à regarder le travail à travers un seul desdits deux panneaux. En conséquence, au moins pendant les périodes de fort ensoleillement, il est intéressant d'occulter les deux panneaux ou uniquement celui qui n'est pas utilisé, de manière à éviter tout éblouissement de l'opérateur et à réduire l'échauffement de la cabine. Une réduction de l'échauffement de la cabine permet avantageusement de réduire la consommation d'énergie de l'engin en réduisant les besoins de climatisation.

Un élément de sécurité sous forme d'une grille non représenté au dessin est destiné à protéger le panneau transparent disposé au-dessus de l'opérateur des risques de casse dus aux chutes de branches lors d'un travail en hauteur.

La structure porteuse 3, 4 forme un caisson creux qui sert de gaine pour les diverses servitudes, telles que conduites hydrauliques, câbles électriques, canaux de climatisation ou autres. Cette colonne technique située sur la partie arrière, au centre, canalise et distribue dans la cabine tous les faisceaux électriques, hydrauliques, frigorifiques vers la climatisation située sur le toit ou autres,qui proviennent de la base motrice. L'accès à cette colonne peut se faire par l'extérieur, ce qui simplifie la maintenance.

Tout en étant de construction simple, la cabine 1 selon l'invention est très fonctionnelle, et confère une excellente visibilité à l'opérateur dans toutes les directions ainsi que vers le bas ce qui lui permet de surveiller de façon confortable le bon fonctionnement de l'outil et l'avance du véhicule.

Dans l'exemple représenté la structure porteuse 3, 4 est disposée dans le plan médian de la cabine de sorte que celle-ci est symétrique et qu'il suffit de peu d'aménagements pour adapter la cabine 1 au sens de circulation dans le pays où elle sera mise en oeuvre.

La cabine est de préférence entièrement symétrique gauche ou à droite, au moins au niveau des vitrages, pour que l'outil travaille à gauche ou à droite de la chaussée

A titre d'exemple une cabine destinée à un pays anglo-saxon où la circulation se fait à gauche de la route est équipée d'une porte d'accès sur la droite, c'est-à-dire du côté opposé au côté gauche de la cabine sur lequel est positionnée la machine.

Selon un mode préféré de l'invention, la cabine 1 présente dans sa forme générale quatre montants cintrés selon la hauteur et une flèche avant, avec une surface totale vitrée voisine de 5 m² pour un volume moyen de la cabine d'environ 3,5 m3.

La cabine est montée sur un véhicule porteur utilisant des machines, outils dangereux (broyeurs, faucheuses,...) pouvant entrainer des projections.

Le pare-brise simple galbe est en verre feuilleté et réalisé sur un outillage de galbage par gravité. La vitre latérale, du côté du travail de l'outil, est en polycarbonate anti-abrasion, simple galbe, d'une épaisseur apte à protéger le chauffeur contre les projections de débris.

La vitre latérale opposée au côté du travail, par exemple à gauche pour la France, est en verre trempé de sécurité, simple galbe. Elle est de préférence escamotable pour constituer une issue de secours.

Le toit de la cabine comporte deux ouvertures : une ouverture de toit côté travail en verre plan, trempé de sécurité et une ouverture de toit côté route escamotable ou non permettant une issue de secours, et aussi la circulation d'air frais.

La porte et la vitre arrière sont en verre plan. La porte se situe sur le côté opposé à l'outil latéral. Les charnières de la porte s'articulent sur la colonne technique de la cabine. Un système de verrouillage est proposé afin d'avoir le maintien de la position ouverte lors des phases de déplacement du véhicule porteur.

Suivant une variante de réalisation non représentée au dessin, la structure porteuse peut être disposée latéralement, du coté opposé à celui ou se trouve l'outil, lorsque ce dernier est disposé latéralement.

## Revendications

1. Cabine frontale de conduite pour véhicule, constituée autour d'une structure de support (3, 4) en forme de L inversé, la structure de support comportant une jambe arrière (3) verticale et une jambe supérieure horizontale (4) dirigée vers l'avant, ladite structure de support (3, 4) supportant les faces de ladite cabine, les faces avant (12), latérales (13, 14), supérieure (11) et arrière (15) de la cabine étant au moins en partie transparentes, la face avant (12) étant disposée de façon oblique,
**caractérisée en ce que** la face inférieure (10) constituant le plancher de la cabine et la face supérieure (11) constituant le plafond de la cabine sont de forme trapézoïdale, le petit coté du trapèze étant situé à l'avant, la face avant (12) de la cabine étant de forme trapézoïdale, le petit coté du trapèze étant situé à la partie inférieure, de sorte que le volume de la cabine a globalement une forme de tronc de pyramide inversée, évasé vers le haut, les deux faces latérales (13, 14) étant aussi disposées de façon oblique, ladite structure de support (3, 4) servant de gaine technique pour les servitudes de la cabine.

2. Cabine selon la revendication 1, **caractérisée en ce que** ladite structure de support (3, 4) porte une armature (5) définissant lesdites faces sur laquelle sont fixées les parois de la cabine.

3. Cabine selon l'une quelconque des revendications précédentes, **caractérisée en ce que** les faces avant (12) et latérales (13, 14), transparentes, sont bombées vers le bas pour améliorer la visibilité vers le bas.

4. Cabine selon l'une quelconque des revendications précédentes, **caractérisée en ce que** la structure de support (3, 4) est disposée dans le plan médian de la cabine.

5. Cabine selon la revendication 4, **caractérisée en ce que** sa face arrière (15) est constituée de la jambe verticale (3) de la structure de support encadrée de panneaux arrières (16, 17), lesdits panneaux arrières (16, 17) étant au moins en partie transparents.

6. Cabine selon la revendication 5, **caractérisée en ce que** les deux panneaux (16, 17) encadrant la jambe verticale (3) de la structure de support font un angle, dirigé vers l'avant, de l'ordre de 15° par rapport à l'axe transversal de la cabine.

7. Cabine selon la revendication 6, **caractérisée en ce que** l'un des panneaux arrières (16, 17) constitue la porte d'entrée de la cabine.

8. Cabine selon l'une quelconque des revendications 4 à 7, **caractérisée en ce que** sa face supérieure (11) est constituée par la jambe horizontale (4) de la structure de support encadrée de deux panneaux transparents (18, 19).

9. Cabine selon la revendication 8, **caractérisée en ce que** l'un au moins des deux panneaux transparents (18, 19) de la face supérieure (11) constitue une issue de secours normalisée.

10. Cabine selon l'une quelconque des revendications 1 à 3, **caractérisée en ce que** la structure de support (3,4) est disposée sur un coté de la cabine.

## Claims

1. Front driver's cab for a vehicle, formed around a support structure (3, 4) in the shape of an inverted L, the support structure comprising a vertical rear leg (3) and a horizontal upper leg (4) directed forwards, said support structure (3, 4) supporting the faces of said cab, the front (12), side (13, 14), upper (11) and rear faces (15) of the cab being at least partially transparent, the front face (12) being arranged in a slanted manner,
**characterised in that** the lower face (10) forming the floor of the cab and the upper face (11) forming the ceiling of the cab have a trapezoidal shape, the small side of the trapezium being situated at the front, the front face (12) of the cab having a trapezoidal shape, the small side of the trapezium being situated at the lower section, so that overall the volume of the cab is shaped like the frustum of an inverted pyramid, flaring upwards, the two side faces (13, 14) also being arranged in a slanted manner, said support structure (3, 4) acting as a utility duct for the services of the cab.

2. Cab according to claim 1, **characterised in that** said support structure (3, 4) bears a frame (5) defining said faces on which the walls of the cab are fixed.

3. Cab according to any of the preceding claims, **characterised in that** the transparent front (12) and side (13, 14) faces are curved downwards in order to improve downward visibility.

4. Cab according to any of the preceding claims, **characterised in that** the support structure (3, 4) is arranged in the median plane of the cab.

5. Cab according to claim 4, **characterised in that** its rear face (15) is formed by the vertical leg (3) of the support structure framed by rear panels (16, 17), said rear panels (16, 17) being at least partially transparent.

6. Cab according to claim 5, **characterised in that** the two panels (16, 17) framing the vertical leg (3) of the support structure form an angle, directed forwards, in the order of 15° relative to the transverse axis of the cab.

7. Cab according to claim 6, **characterised in that** one of the rear panels (16, 17) forms the entrance door of the cab.

8. Cab according to any of claims 4 to 7, **characterised in that** its upper face (11) is formed by the horizontal leg (4) of the support structure framed by two transparent panels (18, 19).

9. Cab according to claim 8, **characterised in that** at least one of the two transparent panels (18, 19) of the upper face (11) constitutes a standard emergency exit.

10. Cab according to any of claims 1 to 3, **characterised in that** the support structure (3, 4) is arranged on one side of the cab.

## Patentansprüche

1. Frontal angeordnetes Fahrerhaus für ein Fahrzeug, das um eine Tragkonstruktion (3, 4) in Form eines umgekehrte L herum angeordnet ist, wobei die Tragkonstruktion einen vertikalen hinteren Pfeiler (3) und einen horizontalen oberen Pfeiler (4) besitzt, der nach vorn gerichtet ist, wobei die Tragkonstruktion (3, 4) die Flächen des Fahrerhauses stützt, wobei die Vorderseite (12), die Seitenflächen (13, 14), die Oberseite (11) und die Rückseite (15) des Fahrerhauses mindestens teilweise transparent sind, wobei die Vorderseite (12) schräg angeordnet ist,
**dadurch gekennzeichnet, dass** die Unterseite (10), die den Boden des Fahrerhauses bildet, und die Oberseite (11), die die Decke des Fahrerhauses bildet, trapezförmig ausgebildet sind, wobei die kurze Seite des Trapezes vorn angeordnet ist, wobei die Vorderseite (12) des Fahrerhauses trapezförmig ausgebildet ist, wobei die kurze Seite des Trapezes an der Unterseite angeordnet ist, so dass der Umfang des Fahrerhauses im wesentlichen die Form eines umgekehrten Pyramidenstumpfes besitzt, der nach oben aufgeweitet ist, wobei die beiden Seitenflächen (13, 14) ebenfalls schräg angeordnet sind, wobei die Tragkonstruktion (3, 4) als Installationsschacht für die Anlagen in dem Fahrerhaus dient.

2. Fahrerhaus nach Anspruch 1, **dadurch gekennzeichnet, dass** die Tragkonstruktion (3, 4) einen Rahmen (5) trägt, der die Flächen bildet, an denen die Wände des Fahrerhauses befestigt sind.

3. Fahrerhaus nach einem der vorhergehenden Ansprüche, **dadurch gekennzeichnet, dass** die transparente Vorderseite (12) und die transparenten Seitenflächen (13, 14) nach unten gewölbt sind, um die Sicht nach unten zu verbessern.

4. Fahrerhaus nach einem der vorhergehenden Ansprüche, **dadurch gekennzeichnet, dass** die Tragkonstruktion (3, 4) in der Mittelebene des Fahrerhauses angeordnet ist.

5. Fahrerhaus nach Anspruch 4, **dadurch gekennzeichnet, dass** seine Rückseite (15) aus dem vertikalen Pfeiler (3) der Tragkonstruktion besteht, der von hinteren Platten (16, 17) eingerahmt ist, wobei die hinteren Platten (16, 17) mindestens teilweise transparent sind.

6. Fahrerhaus nach Anspruch 5, **dadurch gekennzeichnet, dass** die beiden Platten (16, 17), die den vertikalen Pfeiler (3) der Tragkonstruktion einrahmen, einen nach vorn gerichteten Winkel von ca. 15° zu der Querachse des Fahrerhauses bilden.

7. Fahrerhaus nach Anspruch 6, **dadurch gekennzeichnet, dass** eine der hinteren Platten (16, 17) die Eingangstür des Fahrerhauses bildet.

8. Fahrerhaus nach einem der Ansprüche 4 bis 7, **dadurch gekennzeichnet, dass** seine Oberseite (11) aus dem horizontalen Pfeiler (4) der Tragkonstruktion besteht, der von zwei transparenten Platten (18, 19) eingerahmt ist.

9. Fahrerhaus nach Anspruch 8, **dadurch gekennzeichnet, dass** mindestens eine der beiden transparenten Platten (18, 19) der Oberseite (11) einen standardgemäßen Notausstieg bildet.

10. Fahrerhaus nach einem der Ansprüche 1 bis 3, **dadurch gekennzeichnet, dass** die Tragkonstruktion (3, 4) an einer Seite des Fahrerhauses angeordnet ist.
